# FASCICULE DE BREVET EUROPEEN

(11) **EP 3 676 516 B1**
(45) Date de publication et mention de la délivrance du brevet: **05.05.2021**
(21) Numéro de dépôt: 18749018.0
(22) Date de dépôt: 02.07.2018
(51) Int. Cl.: F16H 57/04, F01P 7/16, F01P 5/10

(54) **ENSEMBLE D'UN CIRCUIT DE REFROIDISSEMENT POUR UN MOTEUR THERMIQUE ET UNE BOITE DE VITESSES**
KÜHLKREISLAUFANORDNUNG FÜR EINE WÄRMEKRAFTMASCHINE UND EIN GETRIEBE
COOLING CIRCUIT ASSEMBLY FOR A HEAT ENGINE AND A GEARBOX

(30) Priorité: 30.08.2017 FR 1757981
(43) Date de publication de la demande: 08.07.2020
(73) Titulaire: PSA Automobiles SA, 78300 Poissy (FR)
(72) Inventeur: NOSSIN, Kiwan, 92150 SURESNES (FR); MARCAIS, Philippe, 78500 SARTROUVILLE (FR)
(86) Numéro de dépôt international: PCT/FR2018/051639
(87) Numéro de publication internationale: WO 2019/043304

(56) Documents cités:
- WO-A1-2014/167199
- DE-A1- 19 728 590
- FR-A1- 2 890 430
- FR-A1- 2 986 267
- FR-A1- 2 994 456

## Description

La présente invention concerne un ensemble d'un circuit de refroidissement et d'un groupe motopropulseur comprenant un moteur thermique. Le circuit comporte un radiateur relié fluidiquement à un boîtier de sortie d'un fluide de refroidissement par des premières conduites d'entrée et de sortie, le circuit comprenant aussi une boucle pour un échangeur de chaleur de boîte de vitesses. Un tel ensemble est particulièrement adapté à un véhicule automobile hybride sans que cela soit limitatif.

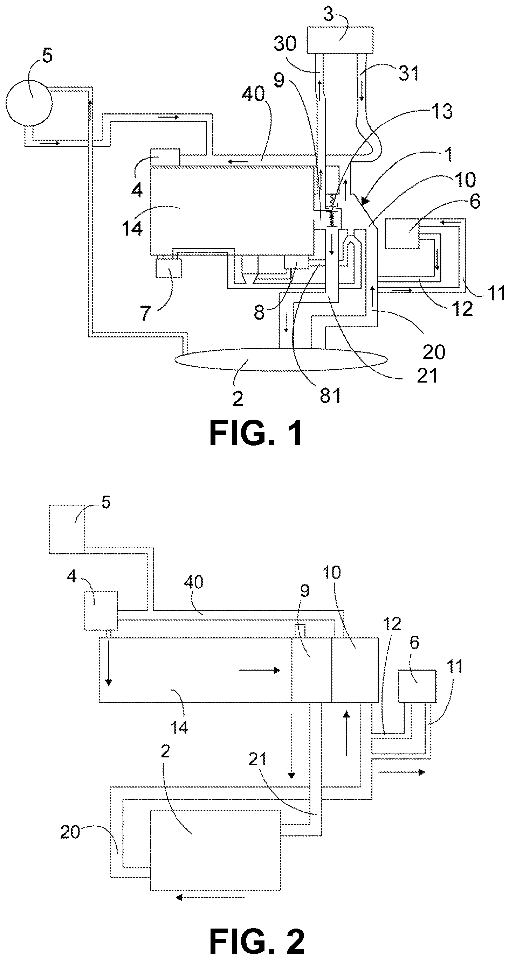

En se référant aux figures 1 et 2, ces figures illustrent essentiellement un ensemble moteur selon l'état de la technique comprenant un moteur thermique 14 et un circuit de refroidissement. L'ensemble moteur illustré, notamment son circuit de refroidissement, n'est pas limitatif dans le cadre de la présente invention.

A la figure 1, le circuit de refroidissement d'un moteur 14 thermique de véhicule automobile comprend un boîtier 1 de sortie d'un fluide de refroidissement, fréquemment appelée boîtier de sortie d'eau ou BSE, le fluide de refroidissement étant essentiellement à base d'eau, un tel boîtier de sortie étant ci-après dénommé boîtier.

Le circuit de refroidissement comprend aussi un radiateur 2 pour le dégagement des calories contenues dans le fluide de refroidissement. Dans une boucle du circuit reliant le boîtier 1 au radiateur 2 dans les deux sens, une première conduite de sortie 21 de fluide du boîtier 1 partant d'une première sortie du boîtier 1 relie le boîtier 1 au radiateur 2 et une première conduite d'entrée 20 de fluide dans le boîtier 1 rentrant par une première entrée relie le radiateur 2 au boîtier 1.

Le fluide de refroidissement quittant le boîtier 1 par la première conduite de sortie 21 est chaud mais perd des calories dans le radiateur 2 avant d'être réacheminé par la première conduite d'entrée 20 de fluide dans le boîtier 1 à une température plus basse. De plus, le radiateur 2 peut présenter une conduite supplémentaire de sortie de fluide du radiateur 2 le reliant au moteur 14 par une boîte de dégazage 5.

De manière classique, une pompe 4 fait circuler le fluide de refroidissement dans le moteur 14. La pompe 4 est raccordée, d'une part, à la conduite de sortie du radiateur 2 via la boîte de dégazage et, d'autre part, à une extrémité de sortie d'une deuxième conduite de sortie 40 de fluide du boîtier 1 par une deuxième sortie. La conduite de sortie via la boîte de dégazage 5 renvoie vers le moteur du fluide de refroidissement qui a été refroidi lors de son passage dans le radiateur 2 en parallèle de l'alimentation en fluide de refroidissement s'effectuant par la deuxième conduite de sortie 40 partant du boîtier 1 vers la portion du circuit de refroidissement interne au moteur 14.

La pompe 4 présente donc une entrée qui communique avec la deuxième conduite de sortie 40 et une sortie communiquant avec une portion du circuit de refroidissement interne au moteur 14. La pompe 4 de refroidissement du moteur 14 peut être une pompe entraînée mécaniquement par le moteur 14 ou en alternative une pompe électrique.

En retour de circulation du fluide vers le boîtier 1, le fluide de refroidissement débouche en sortie du moteur dans au moins une deuxième entrée de fluide dans le boîtier 1 pour alimenter ce boîtier 1 en fluide de refroidissement chaud ayant traversé le moteur 14 pour le refroidir.

Ainsi, en plus des premières entrée et sortie, le boîtier 1 comprend une deuxième sortie destinée à être raccordée à une deuxième conduite de sortie 40 de fluide du circuit de refroidissement débouchant en passant par la pompe 4 dans une portion d'entrée du circuit interne au moteur 14 ainsi qu'au moins une deuxième entrée destinée à la relier à une portion de sortie du circuit interne au moteur 14 pour le retour du fluide dans le boîtier 1.

Il est possible que le circuit de refroidissement puisse inclure des autres conduites et un aérotherme 3. Dans ce cas, le boîtier 1 comprend une sortie débouchant dans une troisième conduite de sortie 30 reliant le boîtier 1 à un aérotherme 3, l'aérotherme 3 comprenant une première conduite de sortie d'aérotherme 31 débouchant dans la deuxième conduite de sortie 40 de fluide du boîtier 1.

Le boîtier 1 peut comprendre deux compartiments 9, 10 communicants l'un avec l'autre par au moins un passage. Le premier compartiment 9 porte deux entrées et deux sorties avec une sortie le reliant à la première conduite de sortie 21 du boîtier 1 et une entrée le reliant à la portion du circuit de refroidissement interne au moteur 14 en sortie du moteur 14. Le second compartiment 10 porte une entrée le reliant à la première conduite d'entrée 20 et une sortie du boîtier 1 le reliant à la deuxième conduite de sortie 40.

Une vanne thermostatique 13 peut obturer ou ouvrir au moins partiellement la sortie reliant le premier compartiment 9 à la première conduite de sortie 21 et un clapet de pression peut être disposé au voisinage de la sortie reliant le second compartiment 10 à la deuxième conduite de sortie 40. La vanne thermostatique 13 peut être une vanne thermostatique pilotée. D'autres thermostats pilotés peuvent aussi être intégrés dans le circuit.

Sans que cela soit limitatif, une portion en dérivation du moteur 14 peut alimenter en fluide une ou des boucles de refroidissement 81, servant par exemple au refroidissement d'une ligne de recirculation des gaz d'échappement à l'admission ou ligne RGE par un échangeur de chaleur 7 de ligne RGE et, le cas échéant, le même échangeur ou un échangeur de chaleur pour une vanne de ligne RGE ou un échangeur de chaleur pour un turbocompresseur 8.

Le boîtier 1 peut comprendre une quatrième entrée pour la boucle de refroidissement 81 d'accessoire comprenant éventuellement une pompe auxiliaire. L'échangeur ou les échangeurs de chaleur peuvent être dédiés respectivement à un accessoire quelconque en périphérie du moteur 14 et donc pas forcément en rapport direct avec le moteur 14.

La pompe auxiliaire, quand présente, est avantageusement une pompe électrique et sert à créer une circulation de fluide de refroidissement dans la boucle 81, la circulation dans cette boucle 81 n'étant pas directement régulée par la pompe 4 en formant une boucle indépendante du reste du circuit de refroidissement.

Il est aussi prévu une boucle pour un échangeur de chaleur de boîte de vitesses 6, boîte qui peut être automatique en étant aussi connue sous l'acronyme de BVA. Typiquement cette boucle comprend un conduit auxiliaire d'entrée 11 piqué sur la première conduite d'entrée 20 de fluide dans le boîtier 1 en provenance du radiateur 2 et un conduit auxiliaire de sortie 12 débouchant dans la première conduite d'entrée 20 de fluide dans le boîtier 1.

Ainsi, en se référant plus particulièrement à la figure 2, il peut être reconnu un premier circuit caloporteur dit circuit haute température permettant de refroidir, à l'aide d'un échangeur air/eau qu'est le radiateur 2, au moyen d'un liquide caloporteur qui est un mélange d'eau et de glycol, un moteur thermique 14 et un moteur électrique tournant intégré au sein d'une boîte de vitesses automatique électrifiée par un échangeur de chaleur 6. Ce même circuit permet d'apporter des calories à l'habitacle véhicule pour le confort de ses occupants à l'aide d'un aérotherme 3 et d'une résistance électrique, voire d'un réchauffeur supplémentaire en option pour les pays de grand froid. C'est sur ce premier circuit que porte la présente demande de brevet et principalement sur la boucle de refroidissement de la boîte de vitesses automatique.

Il peut aussi être présent un deuxième circuit caloporteur dit circuit basse température permettant de refroidir, à l'aide du radiateur 2 des composants électriques : un moteur électrique pour les versions quatre roues motrices du véhicule automobile, disposé sur le train arrière, un onduleur spécifique à ce moteur électrique, un chargeur, et un onduleur pour le moteur électrique intégré à la boîte de vitesses automatique.

Il peut aussi être présent un troisième circuit caloporteur dit circuit très basse température, permettant de refroidir, à l'aide d'un échangeur de chaleur une batterie électrique.

Le document FR-A-2 890 430 décrit un circuit de refroidissement d'une huile d'une boîte de vitesses, notamment d'une boîte de vitesses automatique, d'un véhicule équipé d'un moteur et comportant une conduite de refroidissement du moteur disposée à l'intérieur du moteur. Un ensemble thermostatique contrôle et commande la circulation du liquide de refroidissement en sortie de la conduite de refroidissement du moteur et comprend des première et deuxième sorties, une première sortie communiquant avec l'entrée de la conduite de refroidissement du moteur.

Un radiateur est apte à refroidir le liquide de refroidissement et comprend une entrée et une sortie, l'entrée communiquant avec la deuxième sortie de l'ensemble thermostatique et la sortie communiquant avec l'entrée de la conduite de refroidissement du moteur. Un échangeur de chaleur utilise le liquide de refroidissement du moteur pour refroidir l'huile de la boîte de vitesses.

Le circuit de refroidissement comporte un ensemble de calibrage disposé en série sur une conduite de collecte. L'ensemble de calibrage est constitué d'un manchon dans lequel sont disposés un clapet et un moyen élastique coopérant avec le clapet. L'échangeur de chaleur de la boîte de vitesses est disposé dans une boucle ne présentant pas cependant des moyens d'assurer un refroidissement efficace de l'huile de la boîte de vitesses.

On connait encore du document FR2986267A1 un ensemble d'un circuit de refroidissement utilisant des moyens complexes de pilotage.

Par conséquent, le problème à la base de l'invention est, pour un circuit de refroidissement d'un moteur thermique d'un véhicule automobile comportant comme élément auxiliaire une boîte de vitesses dont le refroidissement est assuré par une boucle piquée sur le circuit de refroidissement, d'assurer un refroidissement optimal de la boîte de vitesses par des moyens simples et peu coûteux.

Pour atteindre cet objectif, il est prévu selon l'invention un ensemble d'un circuit de refroidissement et d'un groupe motopropulseur comprenant un moteur thermique, le circuit comportant un radiateur relié fluidiquement à un boîtier de sortie d'un fluide de refroidissement par des premières conduites d'entrée et de sortie, le circuit comprenant aussi une boucle pour un échangeur de chaleur de boîte de vitesses avec un conduit auxiliaire d'entrée piqué sur la première conduite d'entrée de fluide en provenance du radiateur et un conduit auxiliaire de sortie débouchant dans la première conduite d'entrée de fluide ou dans un conduit débouchant dans une deuxième conduite de sortie partant du boîtier vers le moteur, le conduit auxiliaire de sortie étant associé avec un conduit auxiliaire en dérivation piqué, d'une part, sur le conduit auxiliaire de sortie et, d'autre part, retournant au radiateur, en débouchant dans la première conduite d'entrée de fluide dans le boîtier en aval du conduit auxiliaire d'entrée, caractérisé en ce que le conduit auxiliaire en dérivation comprend une pompe auxiliaire et un clapet anti-retour et le conduit auxiliaire de sortie comprenant un clapet anti-retour en aval du piquage du conduit auxiliaire en dérivation.

L'effet technique est d'obtenir un refroidissement d'une boîte de vitesses, avantageusement automatique et électrifiée, disposée dans le circuit de refroidissement du groupe motopropulseur en utilisant des actionneurs hydrauliques passifs comme des clapets anti-retour, nettement moins coûteux et moins encombrants que des actionneurs hydrauliques actifs, de type électrovanne.

Ceci est particulièrement avantageux pour un véhicule automobile hybride. En effet, la consommation électrique d'un groupe motopropulseur est de plus en plus importante et nécessite d'être réduite. Le remplacement d'une ou d'électrovannes par des actionneurs hydrauliques passifs permet de réduire cette consommation et de consacrer toute l'énergie électrique récupérée lors de la rotation du moteur thermique au rechargement de la ou des batteries nécessaires pour l'alimentation d'un ou de moteurs électriques de propulsion.

Par activation de la pompe auxiliaire dans le conduit auxiliaire de dérivation, une circulation s'établit entre l'échangeur de chaleur de la boîte de vitesses et le radiateur, ceci grâce à la disposition des clapets anti-retour dans le conduit auxiliaire d'entrée et le conduit auxiliaire de dérivation. Cette circulation est indépendante de la circulation en interne du moteur dans la portion principale du circuit de refroidissement passant par le moteur thermique, le boîtier et le radiateur.

Afin de réduire le prix de fabrication ainsi que la masse d'éléments supplémentaires pour la résolution du problème à la base de la présente invention, il n'est pas fait usage d'actionneurs hydrauliques de type électrovanne mais de clapets anti-retour. Le coût d'un clapet anti-retour très inférieur au coût d'un actionneur actif du type électrovanne. De plus, la présente invention procure aussi un avantage technique, étant donné qu'il n'y a pas de stratégies d'ouverture d'électrovannes à concevoir, donc pas de calibration nécessaire, ce qui représente un gain de temps en conception.

La solution proposée par la présente invention avec utilisation de clapets anti-retour est a priori plus fiable qu'un composant électrique. Il n'y a pas non plus de consommation électrique lors du fonctionnement donc plus d'autonomie avec un gain de consommation en C02.

Dans un premier mode, le conduit auxiliaire d'entrée est piqué sur la première conduite d'entrée de fluide dans le boîtier en provenance du radiateur et le conduit auxiliaire de sortie débouche dans la première conduite d'entrée de fluide dans le boîtier. Dans un deuxième mode, le conduit auxiliaire de sortie débouche autre part dans le circuit que dans la première conduite d'entrée de fluide dans le boîtier en provenance du radiateur. Dans les deux modes, le conduit auxiliaire en dérivation piqué sur le conduit auxiliaire de sortie et d'autre part retourne directement ou indirectement vers le radiateur.

Le conduit auxiliaire de sortie de l'échangeur de chaleur de la boîte de vitesses est donc piqué sur la conduite d'entrée de fluide dans le boîtier en provenance du radiateur entre le conduit auxiliaire d'entrée et le boîtier en reversant du fluide réchauffé lors du passage dans l'échangeur de chaleur de la boîte de vitesses dans la conduite d'entrée de fluide vers le boîtier en provenance du radiateur.

Avantageusement, le conduit auxiliaire en dérivation débouche dans la première conduite de sortie du boîtier vers le radiateur à proximité de l'entrée du radiateur. Ceci est valable pour les deux modes de réalisation. En alternative pour ces deux modes, le conduit auxiliaire en dérivation peut déboucher directement dans le radiateur mais ceci requiert une modification du radiateur avec ajout d'une entrée supplémentaire, ce que permet d'éviter un débouché du conduit auxiliaire en dérivation dans la première conduite de sortie du boîtier vers le radiateur.

Avantageusement, la deuxième conduite de sortie partant du boîtier débouche dans une pompe faisant circuler le fluide de refroidissement dans le moteur par une portion du circuit de refroidissement interne au moteur quittant le moteur en débouchant dans le boîtier. Cette pompe est la pompe principale du circuit de refroidissement et crée une circulation du fluide du boîtier vers le moteur thermique.

Avantageusement, le radiateur présente une conduite de dégazage de sortie de fluide du radiateur reliant le radiateur au moteur en passant par une boîte de dégazage, un prolongement de la conduite de dégazage en aval et raccordé à la boîte de dégazage débouchant en amont de la pompe dans la deuxième conduite de sortie partant du boîtier. Il est en effet possible que le radiateur soit relié à la boîte de dégazage par une conduite de dégazage, comme il est montré à la figure 1.

Avantageusement, quand le conduit auxiliaire de sortie débouche dans un conduit débouchant dans une deuxième conduite de sortie partant du boîtier vers le moteur, le conduit est le prolongement de la conduite de dégazage et le conduit auxiliaire de sortie débouche dans le prolongement de la conduite de dégazage en aval de la boîte de dégazage. Ceci est le mode préféré de débouché du conduit auxiliaire de sortie de l'échangeur de chaleur de la boîte de vitesses selon le deuxième mode préférentiel de la présente invention.

Avantageusement, le boîtier comprend deux compartiments, le premier compartiment portant une sortie vers un aérotherme avec des conduites d'entrée et de sortie de l'aérotherme et une sortie pour la première conduite de sortie du boîtier vers le radiateur et le second compartiment portant une entrée pour la première conduite d'entrée en provenance du radiateur, au moins une vanne thermostatique étant logée dans le boîtier de sortie de fluide de refroidissement et une vanne quatre voies étant incorporée sur les conduites de sortie et d'entrée de l'aérotherme.

L'invention concerne aussi un véhicule automobile caractérisé en ce qu'il comprend un tel ensemble.

Avantageusement, le véhicule automobile est un véhicule hybride ou semi-hybride.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'un ensemble d'un circuit de refroidissement avec un groupe motopropulseur comportant un moteur thermique et une boîte de vitesses, cet ensemble étant conforme à l'état de la technique,
- la figure 2 est une représentation schématique simplifiée de l'ensemble montré à la figure 1 en illustrant uniquement une boucle de refroidissement du moteur et une boucle de refroidissement d'une boîte de vitesses,

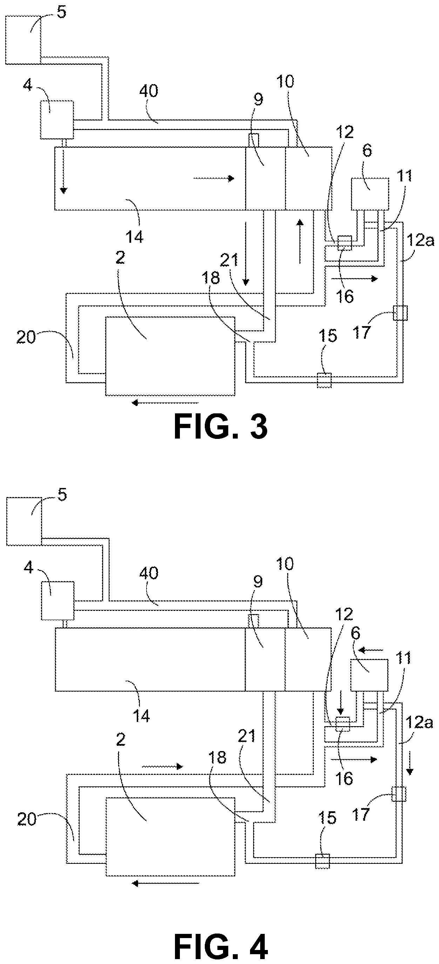

- les figures 3 à 7 sont des représentations schématiques partielles d'un premier mode de réalisation d'un ensemble d'un circuit de refroidissement avec un groupe motopropulseur comportant un moteur thermique et une boîte de vitesses selon la présente invention, une boucle d'échange de chaleur de la boîte de vitesses étant piquée sur une conduite du radiateur de l'ensemble,

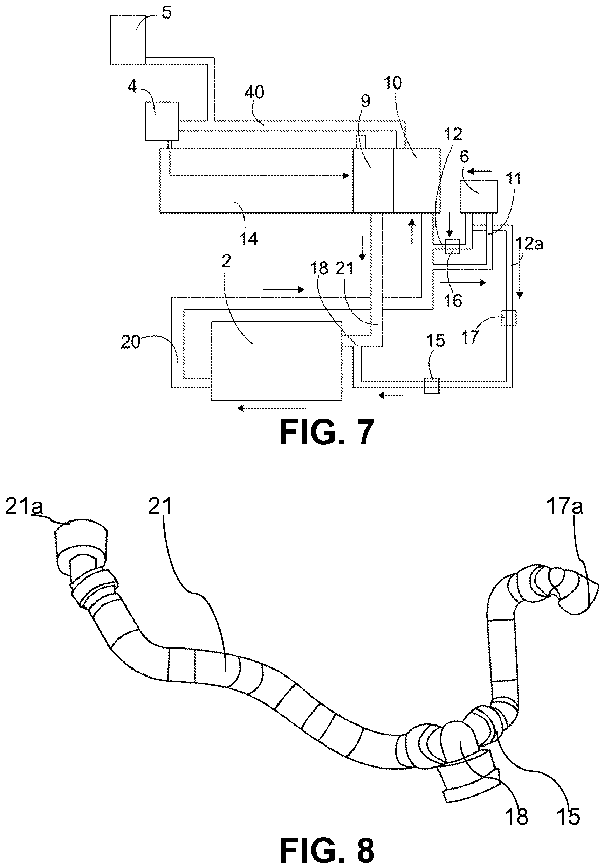

- la figure 8 est une représentation schématique d'une conduite de radiateur et d'un conduit de dérivation de la boucle d'échange de chaleur de la boîte de vitesses se raccordant à la conduite de radiateur, la conduite de radiateur et le conduit de dérivation appartenant à l'ensemble selon la présente invention illustré aux figures 3 à 7,

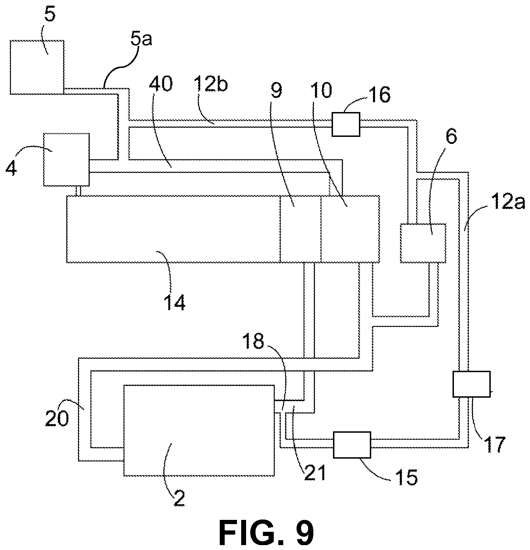

- la figure 9 est une représentation schématique partielle d'un deuxième mode de réalisation de l'ensemble d'un circuit de refroidissement avec un groupe motopropulseur comportant un moteur thermique et une boîte de vitesses selon la présente invention, une boucle d'échange de chaleur de la boîte de vitesses étant piquée sur un prolongement de la conduite de dégazage en aval d'une boîte de dégazage.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Le circuit de fluide caloporteur qui va être décrit est qualifié de circuit de refroidissement du moteur thermique, ceci étant sa fonction primordiale. Il est cependant à considérer que ce circuit de fluide caloporteur peut servir au chauffage du moteur en tout début de démarrage du véhicule, notamment quand la température extérieure est très basse ou peut servir au chauffage de l'habitacle du véhicule automobile. Amont et aval sont à prendre en considération par rapport au sens de la circulation du fluide caloporteur dans le circuit de refroidissement. Aux figures 2 à 7 et 9, le circuit de refroidissement n'est que partiellement représenté avec seulement un circuit de refroidissement du moteur comprenant un radiateur et un boîtier et une boucle d'échange de chaleur pour une boîte de vitesses piquées sur le circuit de refroidissement du moteur. Sortie et entrée sont prises en référence au boîtier.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

En se référant à toutes les figures et en prenant en compte certains des éléments référencés à la figure 1 selon l'état de la technique mais qui sont repris par la présente invention, l'invention concerne un ensemble d'un circuit de refroidissement et d'un groupe motopropulseur comprenant un moteur 14 thermique selon la revendication 1.

Le circuit de refroidissement sert à une circulation d'un fluide de refroidissement à travers le moteur 14 et des éléments auxiliaires 7, 8 au moteur 14 qu'il convient de refroidir. Il peut remplir des exigences de confort en comprenant une branche passant par un aérotherme 3 pour le chauffage ou le refroidissement d'un habitacle d'un véhicule automobile.

Le circuit de refroidissement comporte un radiateur 2 relié fluidiquement à un boîtier 1 de sortie d'un fluide de refroidissement par des premières conduites d'entrée et de sortie 20, 21. Le circuit comprend aussi une boucle pour un échangeur de chaleur 6 de boîte de vitesses, cette boucle pouvant être monté en dérivation d'un circuit de refroidissement principal passant par le moteur 14, le boîtier 1 et le radiateur 2.

La boîte de vitesses est avantageusement une boîte de vitesses automatique, avantageusement électrifiée, mais peut être autre en étant par exemple une boîte de vitesses manuelle dont l'huile de lubrification est à refroidir.

Par exemple, dans le cas non limitatif d'une boîte de vitesses automatique du moteur 14, une boîte de vitesses automatique du moteur 14 conventionnelle est électrifiée pour le besoin des véhicules hybrides, d'où son appellation sous l'acronyme de « BVA ». Pour ce faire, une machine électrique est disposée au sein de cette boîte afin d'assurer une propulsion avec l'énergie électrique. Cette machine électrique est refroidie par de l'huile en interne de la boîte, huile elle-même refroidie par le liquide de refroidissement du circuit de refroidissement du moteur 14 par l'intermédiaire d'un échangeur de chaleur 6 fluide de refroidissement/huile de lubrification de la boîte de vitesses.

Pour un véhicule hybride, ce qui est une application préférentielle de la présente invention mais non limitative, l'huile en interne de la boîte de vitesses doit être refroidie pendant plusieurs modes de propulsion, à savoir en mode non thermique avec moteur 14 thermique à l'arrêt, par exemple en mode propulsion véhicule en tout électrique, en mode moteur 14 thermique tournant, quel que soit l'état d'ouverture du thermostat du moteur 14.

Sur un moteur 14 conventionnel, comme il peut être vu à la figure 2, l'échangeur fluide caloporteur/huile 6 de la boîte de vitesses est irrigué par le fluide le plus froid du circuit caloporteur, à savoir au plus proche de la sortie du radiateur 2. Pour ce faire, une pièce multivoies est disposée sur la conduite en sortie du radiateur 2 et en entrée du boîtier 1 de manière à dériver une partie du fluide en sortie du radiateur 2 retournant au moteur 14 via le boîtier 1 vers l'échangeur eau/huile 6 de la boîte de vitesses.

La boucle pour l'échangeur de chaleur 6 de boîte de vitesses comprend un conduit auxiliaire d'entrée 11 piqué sur la première conduite d'entrée 20 de fluide dans le boîtier 1 en provenance du radiateur 2 et débouchant dans l'échangeur de chaleur 6 de boîte de vitesses. La boucle comprend aussi un conduit auxiliaire de sortie 12, 12b en sortie de l'échangeur de chaleur 6 de boîte de vitesses qui débouche dans le circuit principal passant par le moteur 14, le boîtier 1 et le radiateur 2.

Selon l'invention, comme il est particulièrement visible aux figures 3 à 7 et 9, le conduit auxiliaire de sortie 12, 12b est associé avec un conduit auxiliaire en dérivation 12a piqué, d'une part, sur le conduit auxiliaire de sortie 12, 12b et, d'autre part, retournant au radiateur 2. Le conduit auxiliaire en dérivation 12a comprend une pompe auxiliaire 17 afin d'assurer une circulation de fluide dans la boucle de l'échangeur de chaleur 6 de la boîte de vitesses et un clapet anti-retour 15 et le conduit auxiliaire de sortie 12, 12b comprend un clapet anti-retour 16 en aval du piquage du conduit auxiliaire en dérivation 12a.

Comme il est notamment visible aux figures 1, 3 à 7 et 9 prises en combinaison, le boîtier 1 peut comprendre deux compartiments 9, 10. Le premier compartiment 9 peut porter une sortie vers un aérotherme 3, l'aérotherme présentant des conduites d'entrée et de sortie de l'aérotherme 30, 31. Le premier compartiment 9 peut porter une sortie pour la première conduite de sortie 21 du boîtier vers le radiateur 2.

Le second compartiment 10 peut porter une entrée pour la première conduite d'entrée 20 en provenance du radiateur 2 et une sortie pour la deuxième conduite de sortie 40 vers le moteur 14.

Au moins une vanne thermostatique 13 peut être logée dans le boîtier 1 de sortie de fluide de refroidissement, avantageusement dans le premier compartiment 9. Une vanne quatre voies, non montrée aux figures, peut être incorporée sur les conduites de sortie et d'entrée de l'aérotherme 30, 31.

Dans un premier mode préférentiel de réalisation de la présente invention, le conduit auxiliaire de sortie 12 débouche dans la première conduite d'entrée 20 de fluide dans le boîtier 1 en provenance du radiateur 2. Ceci est montré aux figures 3 à 7.

Les figures 3 à 7 montrent pour le premier mode préférentiel de réalisation de la présente invention différentes situations de vie avec un moteur 14 thermique fonctionnant, arrêté en étant encore chaud ou froid, ceci principalement pour un véhicule hybride. Il sera fait référence à une vanne thermostatique 13 visible dans le premier compartiment 9 du boîtier 1 comme il est montré à la figure 1.

A la figure 3, il est montré une circulation pour un moteur 14 thermique tournant dans le circuit principal de refroidissement et une circulation vers l'échangeur de chaleur 6 de la boîte de vitesses. Les flèches indiquent les sens de circulation du fluide de refroidissement. Ceci est valable pour les flèches des figures 4 à 7 et 9.

A la figure 4 prise en combinaison avec la figure 1, il est montré un mode de propulsion autre que par moteur 14 thermique. Le moteur 14 thermique est arrêté et il n'y a pas de circulation de fluide vers le moteur 14. La vanne thermostatique 13 dans le premier compartiment 9 du boîtier 1 est fermée.

La pompe auxiliaire 17 de la boucle de l'échangeur de chaleur 6 de la boîte de vitesses crée une circulation de fluide dans cette boucle selon les flèches. Une circulation s'établit entre l'échangeur de chaleur 6 de la boîte de vitesses et le radiateur 2, grâce à la disposition des clapets anti-retour 15, 16.

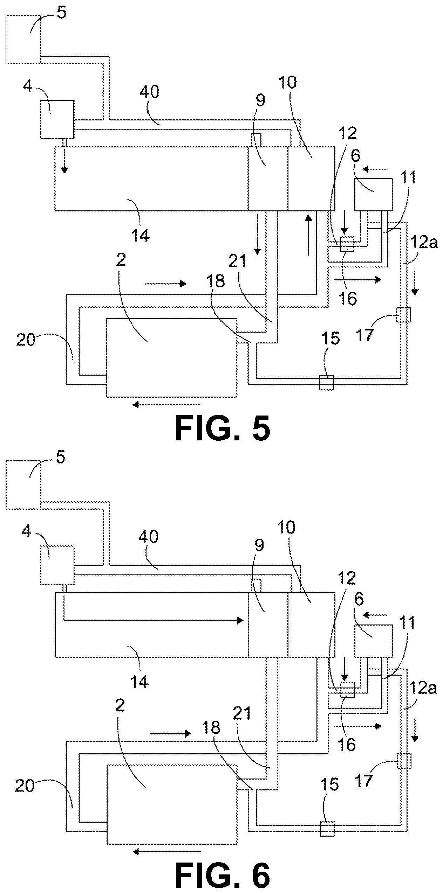

La figure 5, prise en combinaison avec la figure 1, montre un mode de propulsion avec arrêt du moteur 14 thermique avec cependant la vanne thermostatique 13 du premier compartiment 9 du boîtier 1 ouverte. Par activation de la pompe auxiliaire 17 disposée dans le conduit auxiliaire en dérivation 12a de la boucle de l'échangeur de chaleur 6 de la boîte de vitesses, une circulation de fluide de refroidissement s'établit entre l'échangeur de chaleur 6 de la boîte de vitesses et le radiateur 2, ceci grâce à la disposition des clapets anti-retour 15, 16. Il se produit également une circulation de fuite en interne du moteur 14 le temps que la vanne thermostatique 13 se referme avec la diminution de la température du fluide dans le moteur 14.

La figure 6 montre un mode de propulsion par moteur 14 thermique tournant et vanne thermostatique 13 fermée, d'où aucune circulation de fluide dans la première conduite de sortie 21 du boîtier vers le radiateur 2. Par activation de la pompe auxiliaire 17 dans le conduit auxiliaire en dérivation 12a de la boucle de l'échangeur de chaleur 6 de la boîte de vitesses, une circulation s'établit entre l'échangeur de chaleur 6 de la boîte de vitesses et le radiateur 2, grâce à la disposition des clapets anti-retour 15, 16. Cette circulation est indépendante de la circulation en interne du moteur 14 dans la portion principale du circuit de refroidissement passant par le boîtier 1 et le moteur 14 thermique.

La figure 7 montre un mode de propulsion par moteur 14 thermique tournant et vanne thermostatique 13 ouverte, avec circulation de fluide dans la première conduite de sortie 21 du boîtier vers le radiateur 2. Dans une première configuration, la pompe auxiliaire 17 est en fonctionnement. Par activation de la pompe auxiliaire 17 dans le conduit auxiliaire en dérivation 12a de la boucle de l'échangeur de chaleur 6 de la boîte de vitesses, une circulation s'établit entre l'échangeur de chaleur 6 de la boîte de vitesses et le radiateur 2, grâce à la disposition des clapets anti-retour 15, 16.

Cette circulation peut être nulle si la pression en entrée du radiateur 2 est supérieure à la pression en amont du clapet anti-retour 15 disposé dans le conduit auxiliaire en dérivation 12a la boucle de l'échangeur de chaleur 6 de la boîte de vitesses. Ceci peut se produire lorsque le régime moteur 14 thermique est élevé.

Le conduit auxiliaire de sortie 12 peut déboucher dans la première conduite d'entrée 20 de fluide dans le boîtier 1 en aval du conduit auxiliaire d'entrée 11.

Le conduit auxiliaire en dérivation 12a peut déboucher dans la première conduite de sortie 21 du boîtier 1 vers le radiateur 2 à proximité de l'entrée du radiateur 2, ce qui évite de créer une entrée supplémentaire dans le radiateur 2 dédié spécifiquement au conduit auxiliaire en dérivation 12a.

Dans une deuxième configuration, la pompe auxiliaire 17 est à l'arrêt. Une circulation s'établit entre l'échangeur de chaleur 6 de la boîte de vitesses, le moteur 14 thermique et le radiateur 2 comme dans l'état de la technique montré à la figure 2.

La figure 8, en prenant en considération les autres figures et notamment la figure 1 pour les références manquantes à la figure 8, montre la première conduite de sortie 21 du boîtier 1 vers le radiateur 2 avec son embouchure 21a dans le boîtier 1 et une portion du conduit auxiliaire en dérivation 12a qui débouche dans la première conduite de sortie 21 du boîtier 1 vers le radiateur 2 à proximité de l'entrée du radiateur 2 par le raccord 18, ce qui évite de créer une entrée supplémentaire dans le radiateur 2 dédié spécifiquement au conduit auxiliaire en dérivation 12a.

A proximité du raccord 18 se trouve le clapet 15 du conduit auxiliaire en dérivation 12a. A cette figure 8, il est aussi visible la sortie en aval 17a de la pompe auxiliaire 17 non représentée à cette figure. En combinant les figures 1 et 8, l'embouchure dans le boîtier 1 de la première conduite de sortie 21 du boîtier 1 référencée 21a est connectée à la sortie du premier compartiment 9 du boîtier 1 équipé d'une vanne thermostatique 13.

En se référant à toutes les figures, avec la disposition de nouveaux composants électriques, l'implantation des nouvelles pièces d'adaptation comme les conduits11, 12, 12a, 12b, les clapets anti-retour 15, 16 et la pompe auxiliaire 17 est très difficile dans le compartiment moteur 14. Afin de loger de la manière la plus efficiente ces nouvelles pièces, il peut être judicieux d'intégrer le clapet anti-retour 15 entièrement dans le conduit auxiliaire en dérivation 12a de la boucle de l'échangeur de chaleur 6 de boîte de vitesses au sein du raccord 18 du conduit auxiliaire en dérivation 12a avec la première conduite de sortie 21 du boîtier 1 vers le radiateur 2 ou dans des autres connectiques mâles ou femelles.

Dans un deuxième mode préférentiel de réalisation de la présente invention, le conduit auxiliaire de sortie 12b débouche dans un conduit lui-même débouchant dans une deuxième conduite de sortie 40 partant du boîtier 1 vers le moteur 14. Ceci est montré à la figure 9 tout en se référant à la figure 1 pour les références manquantes à la figure 9.

La deuxième conduite de sortie 40 partant du boîtier 1 peut déboucher dans une pompe 4 faisant circuler le fluide de refroidissement dans le moteur 14 par une portion du circuit de refroidissement interne au moteur 14 quittant ensuite le moteur 14 en débouchant dans le boîtier 1.

Le radiateur 2 peut présenter une conduite de dégazage de sortie de fluide du radiateur 2 reliant le radiateur 2 au moteur 14 thermique en passant par une boîte de dégazage 5. En aval de et raccordée à la boîte de dégazage 5, il peut être prévu un prolongement 5a de la conduite de dégazage en aval de et raccordée à la boîte de dégazage 5. Le prolongement 5a de la conduite de dégazage peut déboucher en amont de la pompe dans la deuxième conduite de sortie 40 partant du boîtier 1.

Dans le deuxième mode préférentiel de la présente invention, quand le conduit auxiliaire de sortie 12b débouche dans un conduit 5a débouchant dans une deuxième conduite de sortie 40 partant du boîtier 1 vers le moteur 14, le conduit peut être le prolongement 5a de la conduite de dégazage et le conduit auxiliaire de sortie 12b débouche dans le prolongement 5a de la conduite de dégazage en aval de la boîte de dégazage 5.

L'invention concerne aussi un véhicule automobile comprenant un tel ensemble. Ce véhicule automobile est avantageusement un véhicule hybride ou semi-hybride.

Un véhicule semi-hybride, aussi connu sous la dénomination anglaise de «mild-hybrid», est un véhicule équipé d'un moteur 14 thermique et d'un moteur électrique de faible puissance. Ce véhicule est aussi doté d'un système de récupération d'énergie cinétique, par exemple au freinage ou lors d'une descente, le moteur électrique fonctionnant alors en générateur. Cette énergie récupérée apporte un complément de puissance à bas régime ou lors d'une phase de forte accélération.

Un véhicule entièrement hybride, aussi connu sous la dénomination anglaise de « full-hybrid » peut par définition se déplacer via un ou plusieurs machines électriques sans que le moteur 14 thermique soit en fonctionnement.

Ainsi, une application préférentielle de la présente invention peut être l'adaptation d'un circuit de refroidissement d'un moteur 14 thermique à allumage par compression, notamment un moteur 14 Diesel ou fonctionnant au gazole et d'un moteur 14 thermique à allumage commandé, notamment un moteur 14 à carburant essence ou à mélange contenant de l'essence, en un circuit de refroidissement répondant aux besoins d'un véhicule hybride pour le refroidissement d'une boîte de vitesses, avantageusement électrifiée, dont un échangeur de chaleur 6 est disposé dans le circuit de refroidissement.

Selon le mode de propulsion établie, par exemple électrique à 100%, à moteur 14 thermique à 100%, ou pour un fonctionnement hybride avec propulsion simultanée du véhicule par un moteur 14 thermique et un moteur électrique, les actionneurs passifs que sont les clapets anti-retour 15, 16 et autres actionneurs actifs présents dans le circuit comme la pompe principale 4 et/ou la pompe auxiliaire 17, le thermostat piloté 13 du premier compartiment 9 du boîtier 1 sont mis à contribution pour évacuer les calories vers les composants appropriés suivant une circulation de fluide caloporteur souhaitée au sein du circuit de refroidissement.

L'invention n'est nullement limitée aux modes de réalisation décrits et illustrés qui n'ont été donnés qu'à titre d'exemples.

## Revendications

1. Ensemble d'un circuit de refroidissement et d'un groupe motopropulseur comprenant un moteur (14) thermique, le circuit comportant un radiateur (2) relié fluidiquement à un boîtier (1) de sortie d'un fluide de refroidissement par des premières conduites d'entrée et de sortie (20, 21), le circuit comprenant aussi une boucle pour un échangeur de chaleur (6) de boîte de vitesses avec un conduit auxiliaire d'entrée (11) piqué sur la première conduite d'entrée (20) de fluide en provenance du radiateur (2) et un conduit auxiliaire de sortie (12, 12b) débouchant dans la première conduite d'entrée (20) de fluide ou dans un conduit (5a) débouchant dans une deuxième conduite de sortie (40) partant du boîtier (1) vers le moteur (14), le conduit auxiliaire de sortie (12, 12b) étant associé avec un conduit auxiliaire en dérivation (12a) piqué, d'une part, sur le conduit auxiliaire de sortie (12, 12b) et, d'autre part, retournant au radiateur (2) en débouchant dans la première conduite d'entrée (20) de fluide dans le boîtier (1) en aval du conduit auxiliaire d'entrée (11), **caractérisé en ce que** le conduit auxiliaire en dérivation (12a) comprend une pompe auxiliaire (17) et un clapet anti-retour (15) et le conduit auxiliaire de sortie (12, 12b) comprenant un clapet anti-retour (16) en aval du piquage du conduit auxiliaire en dérivation (12a).

2. Ensemble selon la revendication précédente, dans lequel le conduit auxiliaire en dérivation (12a) débouche dans la première conduite de sortie (21) du boîtier (1) vers le radiateur (2) à proximité de l'entrée du radiateur (2).

3. Ensemble selon l'une quelconque des revendications précédentes, dans lequel la deuxième conduite de sortie (40) partant du boîtier (1) débouche dans une pompe (4) faisant circuler le fluide de refroidissement dans le moteur (14) par une portion du circuit de refroidissement interne au moteur (14) quittant le moteur (14) en débouchant dans le boîtier (1).

4. Ensemble selon la revendication précédente, dans lequel le radiateur (2) présente une conduite de dégazage de sortie de fluide du radiateur (2) reliant le radiateur (2) au moteur (14) en passant par une boîte de dégazage (5), un prolongement (5a) de la conduite de dégazage en aval et raccordé à la boîte de dégazage (5) débouchant en amont de la pompe (4) dans la deuxième conduite de sortie (40) partant du boîtier (1).

5. Ensemble selon la revendication précédente, dans lequel, quand le conduit auxiliaire de sortie (12b) débouche dans un conduit (5a) débouchant dans une deuxième conduite de sortie (40) partant du boîtier (1) vers le moteur (14), le conduit est le prolongement (5a) de la conduite de dégazage et le conduit auxiliaire de sortie (12b) débouche dans le prolongement (5a) de la conduite de dégazage en aval de la boîte de dégazage (5).

6. Ensemble selon l'une quelconque des revendications précédentes, dans lequel le boîtier (1) comprend deux compartiments (9, 10), le premier compartiment (9) portant une sortie vers un aérotherme (3) avec des conduites d'entrée et de sortie de l'aérotherme (30, 31) et une sortie pour la première conduite de sortie (21) du boîtier (1) vers le radiateur (2) et le second compartiment (10) portant une entrée pour la première conduite d'entrée (20) en provenance du radiateur (2), au moins une vanne thermostatique (13) étant logée dans le boîtier (1) de sortie de fluide de refroidissement et une vanne quatre voies étant incorporée sur les conduites de sortie et d'entrée de l'aérotherme (30, 31).

7. Véhicule automobile **caractérisé en ce qu'**il comprend un ensemble selon l'une quelconque des revendications 1 à 6.

8. Véhicule automobile selon la revendication précédente, lequel est un véhicule hybride ou semi-hybride.

## Patentansprüche

1. Zusammenbau eines Kühlkreislaufs und eines Antriebsstrangs mit einem Wärmemotor (14), wobei der Kreislauf einen Kühler (2) umfasst, der mit einem Gehäuse (1) fluidisch verbunden ist, um eine Kühlflüssigkeit über die ersten Einlass- und Auslasskanäle (20, 21) auszugeben), wobei die Schaltung auch eine Schleife für einen Getriebewärmetauscher (6) mit einem Hilfseinlasskanal (11) umfasst, der an den ersten Einlasskanal (20) der vom Kühler (2) kommenden Flüssigkeit und eines Hilfsauslassrohrs (12,12b) Öffnen in das erste Fluideinlassrohr (20) oder in ein Rohr (5a), das sich in ein zweites Auslassrohr (40) öffnet, beginnend vom Gehäuse (1) zum Motor (14), dem Hilfsauslasskanal (12, 12b) mit einem Hilfsbypasskanal (12a) verbunden sein, am Hilfsauslasskanal (12, 12b) und andererseits Rückkehr zum Kühler (2) durch Öffnen in den ersten Einlasskanal (20) von Flüssigkeit in dem Gehäuse (1) stromabwärts des Hilfskanals d'Einlass (11) **dadurch gekennzeichnet, dass** der Hilfsbypasskanal (12a) eine Hilfspumpe (17) und ein Rückschlagventil (15) und der Hilfsauslasskanal (12, 12b) einen Rückschlagventilrücklauf (16) umfasst. stromabwärts des verzweigten Hilfskanals (12a).

2. Anordnung nach dem vorhergehenden Anspruch, bei der der Hilfsbypasskanal (12a) in den ersten Auslasskanal (21) des Gehäuses (1) in Richtung des Kühlers (2) nahe dem Einlass des Kühlers (2) mündet.

3. Anordnung nach einem der vorhergehenden Ansprüche, bei der das zweite Auslassrohr (40) ausgehend vom Gehäuse (1) in eine Pumpe (4) mündet, die das Kühlfluid im Motor (14) durch einen Teil der Kreislaufkühlung zirkuliert System innerhalb des Motors (14), das den Motor (14) durch Öffnen in das Gehäuse (1) verlässt.

4. Anordnung nach dem vorhergehenden Anspruch, wobei der Kühler (2) ein Kühlerflüssigkeitsauslass-Entgasungsrohr (2) aufweist, das den Kühler (2) mit dem Motor (14) verbindet, der durch eine Entgasungsbox (5), eine Verlängerung (5a) verläuft des stromabwärtigen Entgasungsrohrs und verbunden mit dem Entgasungskasten (5), der sich stromaufwärts der Pumpe (4) in das zweite Auslassrohr (40) öffnet, beginnend vom Gehäuse (1).

5. Anordnung nach einem vorhergehenden Anspruch, bei der, wenn der Leitungshilfsauslass (12b) in eine Leitung (5a) mündet, die in eine zweite Auslassleitung (40) mündet, die sich vom Gehäuse (1) zum Motor (14) erstreckt, das Rohr ist der Fortsatz (5a) der Entgasungsleitung und
der Hilfsauslass Rohr (12b) in die Verlängerung (5a) des Entgasungsrohr der Entgasung Kasten (5) stromabwärts.

6. Anordnung nach einem der vorhergehenden Ansprüche, wobei das Gehäuse (1) zwei Kammern (9, 10) umfasst, wobei die erste Kammer (9) einen Auslass zu einem Lufterhitzer (3) mit Einlassrohren und Auslass des Lufterhitzers trägt (30, 31) und einen Auslass für das erste Auslassrohr (21) des Gehäuses (1) zum Kühler (2) und das zweite Fach (10), das einen Einlass für den ersten Einlasskanal (20) vom Kühler trägt (2) wobei mindestens ein Thermostatventil (13) in dem Kühlmittelauslassgehäuse (1) untergebracht ist und ein Vierwegeventil in die Auslass- und Einlassrohre des Lufterhitzers (30, 31) eingebaut ist.

7. Kraftfahrzeug, das **dadurch gekennzeichnet ist, dass** es eine Baugruppe nach einem der Ansprüche 1 bis 6 umfasst.

8. Kraftfahrzeug nach dem vorhergehenden Anspruch, das ein Hybrid- oder Semi-Hybridfahrzeug ist.

## Claims

1. Assembly of a cooling circuit and a powertrain comprising a thermal engine (14), the circuit comprising a radiator (2) fluidly connected to a housing (1) for the outlet of a cooling fluid by first pipes inlet and outlet ducts (20, 21), the circuit also comprising a loop for a gearbox heat exchanger (6) with an auxiliary inlet duct (11) stitched onto the first inlet duct (20) fluid coming from the radiator (2) and an auxiliary outlet duct (12, 12b) opening into the first fluid inlet duct (20) or into a duct (5a) opening into a second outlet duct (40) from the housing (1) to the motor (14), the auxiliary outlet duct (12,
12b) being associated with an auxiliary bypass duct (12a) stitched, on the one hand, on the auxiliary outlet duct (12, 12b) and, on the other hand, returning to the radiator (2) by opening into the first duct of fluid inlet (20) in the housing (1) downstream of the auxiliary inlet duct (11), **characterized in that** the auxiliary bypass duct (12a) comprises an auxiliary pump (17) and a non-return valve (15) and the auxiliary outlet duct (12, 12b) comprising a non-return valve (16) downstream of the branch connection of the auxiliary duct (12a).

2. Assembly according to the preceding claim, in which the auxiliary bypass duct (12a) opens into the first outlet duct (21) of the housing (1) towards the radiator (2) near the inlet of the radiator (2).

3. Assembly according to any one of the preceding claims, in which the second outlet pipe (40) starting from the housing (1) opens into a pump (4) circulating the cooling fluid in the engine (14) through a portion of the circuit cooling system internal to the engine (14) leaving the engine (14) by opening into the housing (1).

4. Assembly according the a preceding claim, in which the radiator (2) has a driving radiator fluid outlet vent (2) connecting the radiator (2) to the motor (14) via a degassing chamber (5), an extension (5 a) of the downstream degassing pipe and connected to the degassing box (5) opening upstream of the pump (4) into the second outlet pipe (40) starting from the housing (1).

5. Assembly according to a preceding claim, in which, when the conduit auxiliary outlet (12b) opens into a conduit (5a) opening into a second outlet conduit (40) extending from the housing (1) to the motor (14), the pipe is the extension (5 a) of the degassing pipe and the auxiliary outlet pipe (12b) opens into the extension (5 a) of the degassing pipe downstream of the degassing box (5).

6. Assembly according to any preceding claim, in QU el the housing (1) comprises two compartments (9, 10), the first compartment (9) having an output to a heater (3) with inlet ducts and outlet of the air heater (30, 31) and an outlet for the first outlet pipe (21) of the housing (1) to the radiator (2) and the second compartment (10) carrying an inlet for the first duct of inlet (20) coming from the radiator (2), at least one thermostatic valve (13) being housed in the coolant outlet housing (1) and a four-way valve being incorporated in the outlet pipes and air heater inlet (30, 31).

7. Motor vehicle **characterized in that** it comprises an assembly according to any one of claims 1 to 6.

8. Motor vehicle according to the preceding claim, which is a hybrid or semi- hybrid vehicle.
